# EUROPÄISCHE PATENTSCHRIFT

(11) **EP 1 384 221 B1**
(45) Veröffentlichungstag und Bekanntmachung des Hinweises auf die Patenterteilung: **26.05.2010**
(21) Anmeldenummer: 02722225.6
(22) Anmeldetag: 14.03.2002
(51) Int. Cl.: G09F 9/302, G09F 9/305

(54) **ANZEIGEEINRICHTUNG**
DISPLAY DEVICE
SYSTEME D'AFFICHAGE

(30) Priorität: 16.03.2001 DE 10112640
(43) Veröffentlichungstag der Anmeldung: 28.01.2004
(73) Patentinhaber: Diehl AKO Stiftung & Co. KG, 88239 Wangen (DE)
(72) Erfinder: PRINZ, Michael, 88299 Leutkirch (DE); GOLZ, Dirk, 88239 Wangen (DE); LUTZ, Reinhard, 88239 Wangen (DE)
(74) Vertreter: Diehl Patentabteilung
(86) Internationale Anmeldenummer: PCT/EP2002/002896
(87) Internationale Veröffentlichungsnummer: WO 2002/074041

(56) Entgegenhaltungen:
- DE-U- 20 104 535
- DE-U- 29 613 798
- US-A- 3 402 000
- US-A- 3 481 062
- US-A- 4 214 391

## Beschreibung

Die Erfindung betrifft eine Anzeigeeinrichtung gemäß dem Oberbegriff des Anspruches 1.

Derartige Anzeigeeinrichtungen kommen beispielsweise bei Haushaltsgeräten wie voll integrierten Geschirrspülern o.dgl. zur Anwendung. Bekannte Anzeigeeinrichtungen weisen oftmals zwei Platinen, nämlich eine Leistungsplatine und eine Bedien- bzw. Anzeigenplatine, auf.

Aus der DE 34 15 229 C2 ist eine Lichtanzeige-Vorrichtung zur optischen Anzeige einer Vielzahl von Informationen auf einer Anzeigetafel bekannt, die zu beleuchtende Stellen aufweist, auf deren Rückseite je das Ende eines Lichtleitfaserbündels gerichtet ist, dessen anderes Ende von einer Lichtquelle beleuchtbar ist, deren auf das Ende des Lichtleitfaserbündels gerichtetes Licht in Abhängigkeit von der jeweiligen Information unterbrochen oder freigegeben ist. Gekennzeichnet ist diese bekannte Lichtanzeige-Vorrichtung dadurch, daß in Abhängigkeit von den Informationen wahlweise der Betriebszustand der jeweiligen Lichtquelle einstellbar ist, daß die Informationen Betriebszustände von Lichtquellen sind, die in einer Anlage räumlich verteilt sind, deren Plan maßstabgerecht oder schematisch auf der Anzeigetafel mit den Enden der Lichtleitfaserbündel auf der Rückseite derjenigen Stellen vorgesehen ist, an denen jeweils eine Lichtquelle in der Anlage vorhanden ist, daß die Enden der Lichtleitfaserbündel plangeschliffen, von einer zylindrischen Fassung umgeben und in Bohrungen, die von der Rückseite der durchsichtigen Anzeigetafel ausgehen und nicht durchgehend sind, eingesteckt sind, und daß bei ebener vorderer Oberfläche der Anzeigetafel zwischen den planen Enden der Lichtleitfaserbündel und der Anzeigetafel je ein kegeliger oder in etwa kegeliger Luftzwischenraum vorgesehen ist.

Die DE 36 16 446 A1 beschreibt eine Zeitanzeigevorrichtung mit einer Analoganzeige, einem Uhrwerk und einem Ziffernblatt mit zugehörigen Zeigern. Das Ziffernblatt weist an den Anzeigepunkten für Stunden, Minuten und gegebenenfalls Sekunden Bohrungen auf, die je das eine Ende einer Lichtleitfaser aufnehmen, deren anderes Ende zum entsprechenden Punkt einer beliebig gestaltbaren Zeitanzeigefläche, entfernt vom primären Ziffernblatt, geführt ist. Vor dem primären Ziffernblatt ist eine dieses anstrahlende Lichtquelle angeordnet. Die Zeiger weisen transparente Farbplättchen zum unterschiedlichen Einfärben des von den in den Bohrungen des Ziffernblattes sitzenden Enden der Lichtleitfasern aufgenommenen Lichtes der Lichtquelle auf

Ein Miniaturfrontplatten-Einbauelement für die Leiterplattenmontage ist aus der DE 94 07 115 U1 bekannt. Dieses bekannte Einbauelement besteht aus zwei Schaltelementen und zwei Leuchtanzeigen in einem Kunststoffgehäuse, das Abmessungen von ca. 5 x 15 x 16 mm³ besitzt und für die automatische Bestückung geeignet ist.

Eine Kraftfahrzeug-Orientierungsleuchte bestehend aus einer oder mehreren Leuchtdioden, die in einer Fassung mit vorgeschaltetem Lichtleiter zu einer Funktionseinheit dergestalt zusammengefaßt sind, daß die Lichtleiter in unterschiedlichen Ausführungen über Lichtumlenkung durch Prismen bzw. Spiegel über die Leuchtfläche zur Anleuchtung auf den Anstrahlflächen führen oder über die Prismen bzw. Spiegel zu einer vollständigen Umlenkung des gesamten Lichtbündels führen, wobei die Stromversorgung über integrierte Vorwiderstände, die mit Led-anschlüssen verbunden sind, geregelt werden kann, ist aus der DE 296 13 798 U1 bekannt.

Die DE 198 51 505 A1 offenbart ein Schaltelement mit einem Lichtsender, der zu einer Einkoppelstelle einer Lichtleiteranordnung benachbart angeordnet ist. Dieses bekannte Schaltelement weist außerdem einen Lichtempfänger auf, der zu einer Auskoppelstelle der Lichtleiteranordnung benachbart angeordnet ist, wobei die Lichtleiteranordnung eine von dem vom Lichtsender ausgehenden Licht durchstrahlte Betätigungsfläche besitzt und der auf Licht aus dem Bereich der Betätigungsfläche ansprechende Lichtempfänger mit einer Auswerteelektronik verbunden ist, die bei Überschreiten eines vorbestimmten Schwellenwertes durch den Signalpegel des vom Lichtempfänger erzeugten Ausgangssignales eine Schaltzustandsänderung bewirkt.

Die für die Abgrenzung des Hauptanspruches gattungsbildenden Maßnahmen sind aus der DE 27 07 081 A1 bekannt. Dort ist für jedes Anzeigesegment ein keilförmiger Lichtleiter vorgesehen, an dessen schmalem Stirnbereich die einstrahlende Lichtquelle gelegen ist, während gegenüberliegend die breite Stirnseite oder seitlich daran eine streifenförmige Lichtaustrittsfläche das Anzeigesegment bildet. Mit ihren schmalen Lichteintrittsenden stecken die einzelnen brettförmigen, je nach den geometrischen Gegebenheiten hinsichtlich Lage und Orientierung der Segmente abknickend verlaufenden Lichtleiter dicht neben- und übereinander gestaffelt in einer Positionierungsplatte. Gegenüberliegend sind sie derart befestigt, daß sich aus den einzelnen Segmenten die gewünschte Anzeigegeometrie ergibt. Dieses passende Zusammenstecken unterschiedlich komplex geformter Lichtleiter ist aber produktionstechnisch sehr aufwendig, ganz abgesehen von Präzisionsproblemen der segmentierten Anzeige etwa bei mechanischer Beanspruchung der Anzeigeeinrichtung.

In der US 5,874,901 A ist ein stufenförmiges Gebilde von rechtwinklig abgeknickt verlaufenden Lichtleiterstangen vorgesehen, um die Abstrahlung von auf einer Leiterplatte angeordneten Lichtquellen zu Austrittsöffnungen in einer Abdeckplatte zu führen. Die Lichtleiter sind auf diesem Weg allerdings unterbrochen und dadurch in einen Speiseteil und einen Anzeigeteil getrennt, um den Anzeigeteil relativ zum Speiseteil bewegbar zu machen und nur in einer bestimmten Relativstellung den jeweiligen Lichtweg zu schließen. Die bis auf wenige speichenförmige Verbindungen freitragend aufeinander zu ragenden, fingerförmigen Lichtleiterstangen lassen aber keine große Zuverlässigkeit hinsichtlich der Gleichzeitigkeit der Überbrückung aller Unterbrechungen in den einzelnen Lichtleitwegen erwarten und sind deshalb eher für allgemeine Signalisierungszwecke als für tatsächliche Anzeigezwecke brauchbar.

Sind die Leistungsplatine und die Anzeigenplatine einer Anzeigeeinrichtung der eingangs genannten Art in einer gemeinsamen Ebene bzw. in zueinander parallelen Ebenen vorgesehen, so lassen sich diese mit Standardbauteilen einfach bestücken. Wird die Parallelität verlassen, d.h. schließt die Anzeigenebene mit der Leiterplattenebene einen bestimmten von 0° verschiedenen Winkel ein, so ist ein zusätzlicher Aufwand in Form einer zweiten Leiterplatte sowie eines die beiden Leiterplatten miteinander verbindenden Verbindungselementes, bei dem es sich üblicherweise um ein Verbindungskabel handelt, erforderlich. Daraus resultieren in der Fertigung zusätzliche Prozeßschritte. Diese wirken sich auf die Herstellungskosten entsprechend aus.

Eine abgewinkelte Ausbildung ist auch durch relativ teuere Sonderbauteile, bei welchen es sich beispielsweise um einen speziellen Winkelsockel oder um kundenspezifische Anzeigenmodule handelt, realisierbar.

In Kenntnis dieser Gegebenheiten liegt der Erfindung die Aufgabe zugrunde, eine Anzeigeeinrichtung der eingangs genannten Art zu schaffen, die vergleichsweise einfach und preisgünstig realisierbar ist, wobei außerdem eine Lichtumlenkung beliebigen Winkels möglich ist, d.h. bei welcher die Leiterplatte der mindestens einen mit den Lichtquelle und die Ein- oder Mehrsegmentanzeige miteinander einen beliebigen Winkel einschließen können.

Diese Aufgabe wird bei einer Anzeigeeinrichtung der eingangs genannten Art erfindungsgemäß durch die Merkmale des Kennzeichenteiles des Anspruches 1 gelöst. Bevorzugte Aus- bzw. Weiterbildungen der erfindungsgemäßen Anzeigeeinrichtung sind in den Unteransprüchen gekennzeichnet.

Die erfindungsgemäße Anzeigeeinrichtung weist die Vorteile auf, daß sie aus wenigen Einzelteilen einfach und preisgünstig realisierbar ist, wobei die mit der mindestens einen Lichtquelle oder mit den Lichtquellen bestückte Leiterplatte und die Ein- oder Mehrsegmentanzeige miteinander jeden beliebigen Winkel zwischen 0 und 90° und größer als 90° - in Abhängigkeit von den jeweiligen Gegebenheiten - einschließen können.

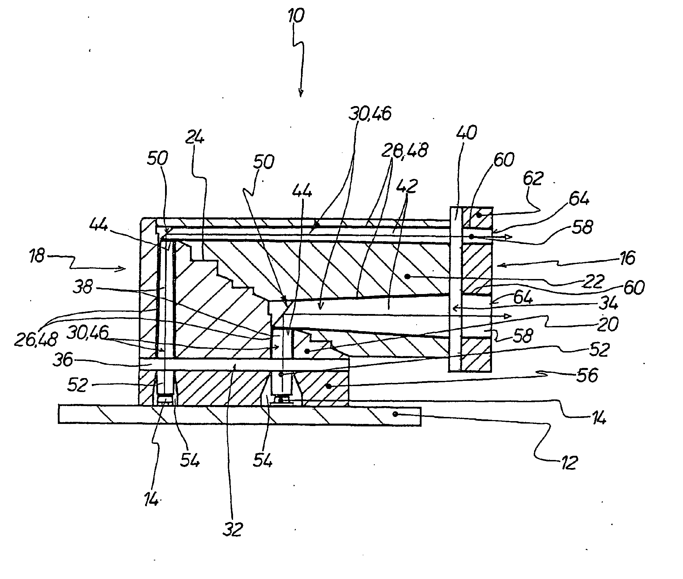

Weitere Einzelheiten, Merkmale und Vorteile ergeben sich aus der nachfolgenden Beschreibung eines in der Zeichnung längsgeschnitten dargestellten Ausführungsbeispieles der erfindungsgemäßen Anzeigeeinrichtung.

Die Figur zeigt eine Ausbildung der Anzeigeeinrichtung 10 mit einer Leiterplatte 12, die mit Lichtquellen 14 bestückt ist. Bei den Lichtquellen 14 handelt es sich vorzugsweise um SMD-LED's . Die Leiterplatte 12 ist mit einer der Anzahl Segmente einer Mehrsegmentanzeige 16 entsprechenden Anzahl Lichtquellen 14 bestückt, von denen in der Zeichnung nur zwei Lichtquellen 14 dargestellt sind.Es kann auch eine einzige Lichtquelle 14 bzw. eine Einsegmentanzeige 16 realisiert sein. Nachfolgend ist jedoch von einer Mehrsegmentanzeige 16 die Rede. Die Mehrsegmentanzeige 16 schließt mit der Leiterplatte 12 einen rechten Winkel ein. Die Anzeigeeinrichtung 10 weist einen Block 18 auf. Der Block 18 besteht aus einem der Leiterplatte 12 zugeordneten ersten Körper 20 und aus einem zweiten Körper 22, die mit aneinander angepaßten Anlageflächen 24 aneinander anliegen und miteinander fest verbunden werden bzw. sind. Die Körper 20 und 22 dienen insbesondere dazu, Lichtleitkörper 32 und 34 im Raum definiert zu fixieren und ein enges Aufeinandertreffen von Lichtübergabeflächen, d.h. von Koppelflächen 44 jeweils zusammengehörender Lichtfinger 38 und 42 der Lichtleitkörper 32 und 34 sicherzustellen. Die beiden Blöcke 18 und 22 können beispielsweise auch durch Rahmen oder durch andere, geeignet gestaltete Führungselemente ersetzt sein.

Der erste Körper 20 ist bei dem in der Zeichnung dargestellten Ausführungsbeispiel mit ersten Kanälen 26 und der zweite Körper 22 ist mit zweiten Kanälen 28 ausgebildet. Die ersten Kanäle 2 6 sind im ersten Körper 20 den Lichtquellen 14 entsprechend vorgesehen. Die zweiten Kanäle 28 sind derartig vorgesehen, daß sie mit den ersten Kanälen 26 im zusammengebauten Zustand der Körper 20 und 22 zum Block 18 miteinander verbunden sind und Lichtleiter-Führungskanäle 30 bilden. Die Lichtleiter können auch umspritzt sein. Beispielsweise kann der erste Lichtleitkörper 32 mit dem ersten Körper 20 in 2K-Technologie gespritzt sein, um den ersten Lichtleitkörper mit dem zugehörigen ersten Körper 20 zu realisieren. Gleiches gilt für den zweiten Lichtleitkörper 34 mit dem zweiten Körper 22, die ebenfalls in 2K-Technologie realisiert sein können.

Dem ersten Körper 20 ist - wie bereits ausgeführt worden ist - ein erster Lichtleitkörper 32 und dem zweiten Körper 22 ist ein zweiter Lichtleitkörper 34 zugeordnet. Der erste Lichtleitkörper 32 weist ein erstes Plattenelement 36 auf, von dem erste Lichtfinger 38 integral weg, d.h. in die ersten Kanäle 26 des ersten Abschirmkörpers 20 hineinstehen. Die ersten Lichtfinger 38 erstrecken sich bis zu einer Koppelfläche 44 der zweiten Lichtfinger 42. Der zweite Lichtleitkörper 34 weist ein zweites Plattenelement 40 und zweite Lichtfinger 42 auf, die vom zweiten Plattenelement 40 integral wegstehen. Die zweiten Lichtfinger 42 erstrecken sich durch die zweiten Kanäle 28 des zweiten Körpers 22 des Blockes 18 bis zur gemeinsamen Koppelfläche 24. Die ersten und zweiten Lichtfinger 38 und 42 sind im zusammengebauten Zustand des ersten und zweiten Abschirmkörpers 20 und 22 miteinander durch die eng aneinander anliegende Koppelflächen 44 lichtleitend verbunden, so daß die ersten und zweiten Lichtfinger 38 und 42 entsprechende Lichtleiter 46 bilden. Die um 90° abgewinkelten Lichtleiter 46 erstrecken sich also durch Führungskanäle 48 hindurch, die von den ersten und zweiten Kanälen 2 6 und 2 8 im ersten und zweiten Körper 20 und 22 gebildet sind.

Die Oberfläche der ersten und zweiten Lichtfinger 38 und 42 ist vorzugsweise poliert, wodurch ein hoher Reflexionsgrad innerhalb der Lichtfmger 38, 42 erzielt bzw. ein Austreten von Streulicht aus den Lichtfingern 38, 42 verhindert wird. Die Lichtfinger 38, 42 und die zugehörigen Kanäle 26, 28 können aneinander querschnittsmäßig mit einer definierten Spieltoleranz angepaßt sein, so daß die im Spalt zwischen den Lichtfingern 38, 42 und der Oberfläche der Kanäle 26, 28 befindliche Luft infolge optischer Isolation eine Totalflexion des durch die Lichtleitkörper 32, 34 geleiteten Lichtes bewirkt.

Bei dem in der Figur dargestellten Ausführungsbeispiel sind die zweiten Lichtfinger 42 in der Nachbarschaft der Koppelflächen 44 jeweils mit einer total reflektierenden Lichtumlenkfläche 50 ausgebildet.

Das erste Plattenelement 36 des ersten Lichtleitkörpers 32 ist als Zwischenplatte ausgebildet, von der von der einen Seite die ersten Lichtfinger 38 und von der den Lichtfingern 38 gegenüberliegenden zweiten Seite Lichtquellen-Ankoppelabschnitte 52 integral wegstehen. Die Lichtquellen-Ankoppelabschnitte 52 sind den Lichtquellen 14 zugeordnet, sie erstrecken sich in Durchgangslöcher 54 hinein, die in einer Koppelplatte 56 ausgebildet sind. Die Koppelplatte 56 besteht vorzugsweise aus einem dunklen bzw. aus einem schwarzen, d.h. lichtundurchlässigen Material. Die Koppelplatte 56 kann ein integrales Bestandteil der Leiterplatte 12 oder ein integrales Bestandteil eines (nicht dargestellten) Elektronikmodul-Gehäuses sein, das zum Positionieren der Leiterplatte 12 vorgesehen ist.

Kann ein sogenanntes Nebenleuchten bzw. Überstrahlen von Licht der Lichtquellen 14 in gewissen Grenzen akzeptiert werden, so kann die Koppelplatte 5 6 gegebenenfalls auch entfallen. Bei einer solchen Ausbildung der zuletzt genannten Art sind dann auch die Lichtquellen-Ankoppelabschnitte 52 nicht vorhanden, so daß der erste Lichtleitkörper 32 nur das an den Lichtquellen 14 anliegende erste Plattenelement 36 und die mit diesem integral verbundenen ersten Lichtfinger 38 aufweist.

Der zweite Lichtleitkörper 34 kann wie der erste Lichtleitkörper 32 ausgebildet sein, d.h. das zweite Plattenelement 40 des zweiten Lichtleitkörpers 34 kann eine Zwischenplatte bilden, von deren einer Seite die zweiten Lichtfinger 42 und von deren gegenüberliegender zweiten Seite Lichtauskoppelabschnitte 58 integral wegstehen. Die Lichtauskoppelabschnitte 58 erstrecken sich durch Durchgangslöcher 60 quasi spielfrei hindurch, die in einer Konturblende 62 ausgebildet sind. Die Konturblende 62 besteht wie die Koppelplatte 56 vorzugsweise aus einem dunklen bzw. schwarzen, d.h. lichtundurchlässigen Material, wodurch eine Optimierung der Konturschärfe der Mehrsegmentanzeige 16 an der Lichtaustrittsfläche 64 erzielt wird. Die Lichtaustrittsfläche ist vorzugsweise mit einer definierten Oberflächen-Rauhheit ausgebildet, um ein möglichst gleichmäßiges Erscheinungsbild des jeweiligen Informationssymboles der Mehrsegmentanzeige 16 zu erzielen.

Im Bedarfsfall kann der zweite Lichtleitkörper 34 auch ohne die Lichtauskoppelabschnitte 58 ausgebildet sein. Bei einer solchen Ausbildung der zuletzt genannten Art bildet dann das zweite Plattenelement 40 die Lichtaustrittsfläche, -die beispielsweise mit einer Streufolie versehen sein kann. Bei dieser Streufolie kann es sich um eine hinterdruckte Streufolie mit oder ohne aufgedruckte Symbole handeln. Werden an die Konturschärfe der Mehrsegmentanzeige 16 keine besonderen Anforderungen gestellt, so kann gegebenenfalls auf die besagte Streufolie auch verzichtet werden.

## Patentansprüche

1. Anzeigeeinrichtung (10) mit Anzeige-Segmenten (16), zwischen denen und diesen zugeordneten Lichtquellen (14) Lichtleiter (46) verlaufen,
**dadurch gekennzeichnet,**
**dass** jeweils zwei Lichtfinger (38,42), die an Koppelflächen (44) aneinandergrenzend den jeweiligen Lichtleiter (46) bilden, durch Führungskanäle (26,28) in Führungskörpem (20,22) hindurch verlaufen, welche längs Anlageflächen (24) miteinander zu einem Block (18) verbunden sind.

2. Anzeigeeinrichtung nach Anspruch 1,
**dadurch gekennzeichnet,**
**dass** jeder Lichtfinger (42) eine Lichtaustrittsfläche (64) mit einer definierten Oberflächenrauhigkeit aufweist.

3. Anzeigeeinrichtung nach einem der Ansprüche 1 oder 2,
**dadurch gekennzeichnet,**
**dass** dem ersten Körper (20) ein erster Lichtleiterkörper (32) und dass dem zweiten Körper (22) ein zweiter Lichtleitkörper (34) zugeordnet ist, wobei der erste Lichtleitkörper (32) ein erstes Plattenelement (36) aufweist, von dem die ersten Lichtfinger (38) einstückig weg stehen, und wobei der zweite Lichtleitkörper (34) ein zweites Plattenelement (40) aufweist, von dem die zweiten Lichtfinger (42) einstückig weg stehen, wobei die ersten und die zweiten Lichtfinger (38 und 42) im zusammengebauten Zustand des ersten und zweiten Körpers (20 und 22) miteinander über Koppelflächen (44) lichtleitend verbunden sind.

4. Anzeigeeinrichtung nach Anspruch 3,
**dadurch gekennzeichnet,**
**dass** die ersten oder die zweiten Lichtfinger (38,42) in der Nachbarschaft ihrer Koppelflächen (44) jeweils mit einer Lichtumlenkfläche (50) ausgebildet sind.

5. Anzeigeeinrichtung nach Anspruch 3 oder 4,
**dadurch gekennzeichnet,**
**dass** das erste Plattenelement (36) als Zwischenplatte ausgebildet ist, von deren einer Seite die ersten Lichtfinger (38) und von deren gegenüberliegender zweiter Seite Lichtquellen-Ankoppelabschnitte (52) weg stehen.

6. Anzeigeeinrichtung nach Anspruch 5,
**dadurch gekennzeichnet,**
**dass** zum Einfassen der Lichtquellen (14) und der Lichtquellen-Ankoppelabschnitte (52) eine Koppelplatte (56) vorgesehen ist.

7. Anzeigeeinrichtung nach Anspruch 6,
**dadurch gekennzeichnet,**
**dass** die Koppelplatte (56) in ein zum Positionieren einer Leiterplatte (12) vorgesehenes Elektronikmodul-Gehäuse integriert ist.

8. Anzeigeeinrichtung nach einem der Ansprüche 3 bis 7,
**dadurch gekennzeichnet,**
**dass** die zweiten Lichtfinger (42) des zweiten Plattenelementes (40) sich in Kanäle (28) des zweiten Körpers (22) hinein erstrecken.

9. Anzeigeeinrichtung nach Anspruch 8,
**dadurch gekennzeichnet,**
**dass** das zweite Plattenelement (40) als Zwischenplatte ausgebildet ist, von der die zweiten Lichtfinger (42) auf der einen Seite und die Lichtauskoppelabschnitte (58) auf der gegenüberliegenden Seite einstückig weg stehen.

10. Anzeigeeinrichtung nach Anspruch 9,
**dadurch gekennzeichnet,**
**dass** sich die Lichtauskoppelabschnitte (58) durch eine Konturblende (62) hindurch erstrecken.

## Claims

1. Display device (10) having display segments (16) between which and light sources (14) associated with them optical waveguides (46) run,
**characterized**
**in that** two light fingers (38, 42), which form the respective optical waveguide (46) on coupling surfaces (44) adjacent to one another, each run through guide channels (26, 28) in guide bodies (20, 22) which are connected to one another along contact surfaces (24) to form a block (18).

2. Display device according to Claim 1,
**characterized**
**in that** each light finger (42) has a light outlet surface (64) with a defined surface roughness.

3. Display device according to either of Claims 1 and 2,
**characterized**
**in that** a first optical waveguide body (32) is associated with the first body (20), and a second optical waveguide body (34) is associated with the second body (22), wherein the first optical waveguide body (32) has a first plate element (38) from which the first light fingers (38) project away integrally, and wherein the second optical waveguide body (34) has a second plate element (40) from which the second light fingers (42) project away integrally, wherein the first and the second light fingers (38 and 42) are connected to one another, such that they conduct light, via coupling surfaces (44) when the first and the second bodies (20 and 22) are in the assembled state.

4. Display device according to Claim 3,
**characterized**
**in that** the first and the second light fingers (38, 42) are each formed with a light deflection surface (50) in the vicinity of their coupling surfaces (44).

5. Display device according to Claim 3 or 4,
**characterized**
**in that** the first plate element (36) is in the form of an intermediate plate, from one face of which the first light fingers (38) project, and from the second, opposite face of which light source coupling sections (52) project.

6. Display device according to Claim 5,
**characterized**
**in that** a coupling plate (56) is provided in order to hold the light sources (14) and the light source coupling sections (52).

7. Display device according to Claim 6,
**characterized**
**in that** the coupling plate (56) is integrated in an electronics module housing, which is provided for positioning of a printed circuit board (12).

8. Display device according to one of Claims 3 to 7,
**characterized**
**in that** the second light fingers (42) of the second plate element (40) extend into channels (28) in the second body (22).

9. Display device according to Claim 8,
**characterized**
**in that** the second plate element (40) is in the form of an intermediate plate, from which the second light fingers (42) project integrally on the one face, and the light output sections (58) project integrally on the opposite face.

10. Display device according to Claim 9,
**characterized**
**in that** the light output sections (58) extend through a contour panel (62).

## Revendications

1. Dispositif indicateur (10) comprenant des segments indicateurs (16), des guides de lumière (46) s'étendant entre eux et des sources de lumière (14) qui leurs sont associées, **caractérisé en ce que** deux doigts de lumière (38, 42), qui forment sur des surfaces d'accouplement (44) juxtaposées les guides de lumière (46) respectifs, s'étendent à travers des conduits de guidage (26, 28) dans des corps de guidage (20, 22) qui sont reliés entre eux le long des surfaces d'appui (24) pour former un bloc (18).

2. Dispositif indicateur selon la revendication 1, **caractérisé en ce que** chaque doigt de lumière (42) présente une surface de sortie de la lumière (64) ayant une rugosité de surface définie.

3. Dispositif indicateur selon l'une des revendications 1 ou 2, **caractérisé en ce qu'**un premier corps de guide de lumière (32) est associé au premier corps (20) et un deuxième corps de guide de lumière (34) est associé au deuxième corps (22), le premier corps de guide de lumière (32) présentant un premier élément en plaque (36) dont les premiers doigts de lumière (38) s'écartent d'un seul tenant et le deuxième corps de guide de lumière (34) présentant un deuxième élément en plaque (40) dont les deuxièmes doigts de lumière (42) s'écartent d'un seul tenant, les premiers et deuxièmes doigts de lumière (38 et 42) étant reliés optiquement ensemble par le biais de surfaces d'accouplement (44) lorsque le premier et le deuxième corps (20 et 22) sont assemblés.

4. Dispositif indicateur selon la revendication 3, **caractérisé en ce que** les premiers ou les deuxièmes doigts de lumière (38, 42) comportent respectivement une surface de renvoi de la lumière (50) à proximité de leurs surfaces d'accouplement (44).

5. Dispositif indicateur selon la revendication 3 ou 4, **caractérisé en ce que** le premier élément en plaque (36) est réalisé sous la forme d'une plaque intermédiaire d'un côté de laquelle s'écartent les premiers doigts de lumière (38) et du deuxième côté opposé de laquelle s'écartent des sections de connexion de source de lumière (52).

6. Dispositif indicateur selon la revendication 5, **caractérisé en ce qu'**une plaque d'accouplement (56) est prévue pour enchâsser les sources de lumière (14) et les sections de connexion de source lumière (52).

7. Dispositif indicateur selon la revendication 6, **caractérisé en ce que** la plaque d'accouplement (56) est intégrée dans un module électronique prévu pour positionner un circuit imprimé (12).

8. Dispositif indicateur selon l'une des revendications 3 à 7, **caractérisé en ce que** les deuxièmes doigts de lumière (42) du deuxième élément en plaque (40) s'étendent à l'intérieur des conduits (28) du deuxième corps (22).

9. Dispositif indicateur selon la revendication 8, **caractérisé en ce que** le deuxième élément en plaque (40) est réalisé sous la forme d'une plaque intermédiaire de laquelle les deuxième doigts de lumière (42) s'écartent d'un seul tenant d'un côté et des sections d'extraction de la lumière (58) s'écartent d'un seul tenant du côté opposé.

10. Dispositif indicateur selon la revendication 9, **caractérisé en ce que** les sections d'extraction de la lumière (58) s'étendent à travers un cadre profilé (62).
